# EUROPÄISCHE PATENTANMELDUNG

(11) **EP 4 050 225 A1**
(43) Veröffentlichungstag der Anmeldung: **31.08.2022**
(21) Anmeldenummer: 22157483.3
(22) Anmeldetag: 18.02.2022
(51) Int. Cl.: F16B 19/08, F16B 37/06

(54) **SELBSTSTANZENDE FUNKTIONSEINHEIT, ZUSAMMENBAUTEIL UND VERFAHREN ZUM HERSTELLEN EINES ZUSAMMENBAUTEILS**

(30) Priorität: 24.02.2021 DE 102021104442
(71) Anmelder: Profil Verbindungstechnik GmbH & Co. KG, 61381 Friedrichsdorf (DE)
(72) Erfinder: Diehl, Oliver, 61250 Usingen (DE); Jene, Tobias, 61381 Friedrichsdorf (DE); Mahlme, Amer, 61352 Bad Homburg (DE)
(74) Vertreter: Manitz Finsterwald Patent- und Rechtsanwaltspartnerschaft mbB

(57) **Zusammenfassung**

Eine selbststanzende Funktionseinheit (10) zur Anbringung an einem Werkstück (70), insbesondere an einem Blechteil, umfasst ein Befestigungselement (11), das einen Befestigungsabschnitt (13) zum Befestigen der Funktionseinheit (10) an dem Werkstück (70) und einen mit einer dem Werkstück (70) abgewandten Auflagefläche (17) versehenen Funktionsabschnitt (15) aufweist, und ein Fixierelement (31), das - insbesondere mittels einer Drehbewegung - an dem Funktionsabschnitt (15) des Befestigungselements (11) fixierbar ist und das eine dem Werkstück (70) zugewandte Kontaktfläche (33), die in einem an dem Befestigungselement (11) vormontierten Zustand des Fixierelements (31) auf der Auflagefläche (17) aufliegt, und einen Schaft (35) umfasst, der ein mit einer Stanzkante (39) versehenes freies Ende (37) aufweist, welches im an dem Befestigungselement (11) vormontierten Zustand des Fixierelements (31) durch das Befestigungselement (11) hindurchragt, sodass das freie Ende (37) in axialer Richtung aus dem Befestigungselement (11) heraussteht.

## Beschreibung

Die Erfindung betrifft eine selbststanzende Funktionseinheit mit einem Befestigungselement und einem Fixierelement, ein Zusammenbauteil und ein Verfahren zum Herstellen eines Zusammenbauteils.

Derartige Funktionseinheiten sind grundsätzlich bekannt und werden beispielsweise dazu eingesetzt, einen Kabelschuh mit einem Werkstück zu verbinden, indem dieser zwischen dem Befestigungselement und dem Fixierelement eingeklemmt wird. Beispielsweise dient die Funktionseinheit zur Fixierung eines Massekabels für die Verbindung eines elektrischen Verbrauchers in einem Kraftfahrzeug mit einer Masse, nämlich der Fahrzeugkarosserie.

Befestigungselemente werden üblicherweise beim Lackieren des Werkstücks, insbesondere beim Anbringen einer kathodischen Tauchlackierung (KTL), mitlackiert. Die Lackierung muss jedoch anschließend von einer Kontaktoberfläche für den Kabelschuh entfernt werden, um eine einwandfreie Funktion zu gewährleisten. Ferner muss die Lackierung aufwendig von einem gegebenenfalls vorhandenen Gewinde entfernt werden. Um dies zu vermeiden, sind zwar Lackschutzelemente und -deckel bekannt, allerdings müssen diese im weiteren Verlauf des Prozesses als Abfallprodukte entsorgt werden und sind daher unbeliebt.

Es ist eine Aufgabe der vorliegenden Erfindung, ein Funktionselement und ein Zusammenbauteil bereitzustellen, mit denen der Montageaufwand verringert und die Anzahl von Abfallprodukten reduziert werden kann.

Diese Aufgabe wird durch den Gegenstand der unabhängigen Ansprüche gelöst. Vorteilhafte Ausgestaltungen sind Gegenstand der Unteransprüche und sind in der Beschreibung und den Zeichnungen angegeben.

Die erfindungsgemäße Funktionseinheit ist selbststanzend und dient zur Anbringung an einem Werkstück, insbesondere an einem Blechteil. Die Funktionseinheit umfasst ein Befestigungselement, das einen Befestigungsabschnitt zum Befestigen der Funktionseinheit an dem Werkstück und einen mit einer dem Werkstück abgewandten Auflagefläche versehenen Funktionsabschnitt aufweist, und ein Fixierelement, das, insbesondere mittels einer Drehbewegung, an dem Funktionsabschnitt des Befestigungselements fixierbar ist. Das Fixierelement umfasst eine dem Werkstück zugewandte Kontaktfläche, die in einem an dem Befestigungselement vormontierten Zustand des Fixierelements auf der Auflagefläche aufliegt, und einen Schaft, der ein mit einer Stanzkante versehenes freies Ende aufweist. Das freie Ende ragt im an dem Befestigungselement vormontierten Zustand des Fixierelements durch das Befestigungselement hindurch, sodass das freie Ende in axialer Richtung aus dem Befestigungselement heraussteht.

Das freie Ende kann im vormontierten Zustand beispielsweise um etwa 1 mm bis etwa 6 mm aus dem Befestigungselement herausstehen.

Das freie Ende des Schafts kommt daher bei der Befestigung der Einheit an einem Werkstück gleichzeitig mit oder - bevorzugt - vor dem Befestigungselement mit dem Werkstück in Kontakt, so dass das freie Ende die Verformung des Werkstücks letztlich in Gang setzt. Es kann daher davon gesprochen werden, dass das freie Ende vorlaufend zu dem Befestigungselement ist.

Insbesondere weist das Befestigungselement eine Öffnung auf, durch die sich der Schaft des Fixierelements erstreckt. Die Öffnung ist insbesondere koaxial zu einer Längsachse der Funktionseinheit angeordnet und kann folglich auch als zentrale Öffnung bezeichnet werden.

Soweit in der vorliegenden Anmeldung von einem vormontierten Zustand die Rede ist, bezeichnet dies einen Zustand, in dem das Fixierelement an dem Funktionsabschnitt fixiert ist, die Funktionseinheit jedoch noch nicht an einem Werkstück angebracht ist. Um den vormontierten Zustand herzustellen, wird das Fixierelement beispielsweise mittels einer Drehbewegung an dem Funktionsabschnitt befestigt. Vorzugsweise geschieht dies verliersicher durch Verschrauben.

Die Funktionseinheit wird bestimmungsgemäß im vormontierten Zustand verwendet. Dabei werden dem Fixierelement mehrere Funktionen zuteil. Zum einen wirkt dieses als vorauseilender Lochstempel, indem das mit der Stanzkante versehene freie Ende des Schafts beim Einpressen das Werkstück zuerst durchstanzt. Ein Vorlochen des Werkstücks entfällt somit. Zudem schützt das Fixierelement die Auflagefläche während des Auftragens von Lackierungen oder Beschichtungen, sodass kein Lack auf die zum elektrischen Kontaktieren eines Kabelschuhs dienende Auflagefläche fließt. Schließlich ist es vorgesehen, dass ein Kabelschuh zwischen die Auflagefläche und die Kontaktfläche geklemmt werden kann, sodass das Fixierelement im Unterschied zu konventionellen Lackschutzelementen kein Abfallprodukt darstellt, sondern zum Befestigen des Kabelschuhs verwendet wird.

Das Befestigungselement kann einen Basisabschnitt umfassen, von dem sich in axialer Richtung ein zur Montage der Funktionseinheit an dem Werkstück vorgesehener, umformbarer Nietabschnitt erstreckt. Durch eine Nietverbindung wird ein sicherer Halt des Befestigungselements an dem Werkstück sichergestellt.

Vorzugsweise erstreckt sich der Nietabschnitt im an dem Befestigungselement vormontierten Zustand des Fixierelements parallel, insbesondere koaxial, zu dem Schaft, sodass ein relativ aufwandsarmes Anbringen der Funktionseinheit an dem Werkstück gewährleistet ist, indem das Stanzen und das Nieten im Wesentlichen in nur einem Arbeitsschritt vorgenommen werden können.

Das Befestigungselement kann ringförmig ausgebildet sein, und der Schaft kann sich im an dem Befestigungselement vormontierten Zustand des Fixierelements durch das Befestigungselement, insbesondere durch den Nietabschnitt, hindurch erstrecken, was der späteren Verarbeitung mit einem Herausstanzen eines Butzens aus dem Werkstück und dem Umformen des radial außen angeordneten Nietabschnitts zugute kommt.

Der Nietabschnitt weist insbesondere ein freies Ende auf, dessen Außenumfang mit einer zumindest abschnittsweise gekrümmten oder zu einer axialen Richtung zumindest abschnittsweise geneigten Kante versehen ist.

In vorteilhafter Ausgestaltung weist der Befestigungsabschnitt eine Anpressfläche auf, die in den Nietabschnitt übergeht. Insbesondere ist die Anpressfläche an dem Basisabschnitt ausgebildet. Die Anpressfläche dient dabei als Fläche, an die Material des Werkstücks nach dem Einpressen der Funktionseinheit in das Werkstück in Kontakt kommt.

Die Anpressfläche und/oder der Nietabschnitt kann mit wenigstens einem Verdrehsicherungsmerkmal, insbesondere mit zumindest einer Einkerbung zum Aufnehmen von verdrängtem Material des Werkstücks und/oder mit zumindest einer Rippe zum Verdrängen von Material des Werkstücks, versehen sein. Beispielsweise können sich auch Rippen und Einkerbungen in Umfangsrichtung abwechseln und vorzugsweise in gleichen Abständen zueinander angeordnet sein.

Eine axiale Erstreckung des Befestigungselements kann etwa 75 % bis etwa 95 %, vorzugsweise etwa 85 % bis etwa 90 % einer axialen Erstreckung des Schafts betragen, sodass der Schaft durch das Befestigungselement hindurchragt.

Vorzugsweise ist die Kontaktfläche mit einer Vertiefung, insbesondere einer Ringnut, versehen, um im vormontierten Zustand zumindest eine an der Auflagefläche angeordnete Erhebung aufzunehmen. Wenn ein Kabelschuh zwischen die Auflagefläche und die Kontaktfläche geklemmt wird, wird die Erhebung in das Material des Kabelschuhs gedrückt, sodass dieser sicher fixiert wird und zu der Auflagefläche und der Kontaktfläche weder verrutschen noch verdrehen kann.

Das Befestigungselement und das Fixierelement können miteinander verschraubbar sein. Vorzugsweise weist das Befestigungselement ein Innengewinde und das Fixierelement ein Außengewinde auf. Insbesondere kann das Befestigungselement als Mutternelement ausgebildet sein, und das Fixierelement kann als Bolzenelement ausgebildet sein.

Das erfindungsgemäße Zusammenbauteil umfasst die oben beschriebene Funktionseinheit und ein Werkstück, insbesondere ein Blechteil. Das Befestigungselement ist in ein durch die Stanzkante des Schafts in das Werkstück eingebrachtes Stanzloch eingepresst. Umgeformtes Material des Befestigungsabschnitts hintergreift an das Stanzloch angrenzendes Material des Werkstücks zumindest abschnittsweise.

Anders formuliert bildet das umgeformte Material eine Aufnahmenut aus, in welcher an das Stanzloch angrenzendes Material des Werkstücks aufgenommen ist, um einen in axialer Richtung wirkenden Hinterschnitt zu bilden. Material des Befestigungsabschnitt kann beispielsweise etwa im Querschnitt hakenförmig nach außen umgeformt sein, sodass eine Öffnung des Hakens die Aufnahmenut ausbildet und das Material des Werkstücks aufnimmt.

Vorzugsweise bildet das umgeformte Material des Befestigungsabschnitts einen in Umfangsrichtung geschlossenen Hinterschnitt, um einen sicheren Halt der Funktionseinheit an dem Werkstück zu gewährleisten.

Das Material des Befestigungsabschnitts kann zum Bilden des Hinterschnitts nach radial außen umgeformt sein und insbesondere im Querschnitt hakenförmig nach außen umgeformt beziehungsweise aufgerollt sein.

Das Werkstück kann in einem Bereich um das Stanzloch in einer Einführrichtung der Funktionseinheit umgebogen sein. Insbesondere bildet das Werkstück in diesem Bereich eine Vertiefung ähnlich einem Trichter auf, der einen Teil des Befestigungsabschnitts bzw. des Basisabschnitts aufnimmt. Diese trichterförmige Vertiefung wird im Zuge des Stanzprozesses und/oder des sich daran anschließenden Prozesses des Einführens des Befestigungsabschnitts bzw. des Nietabschnitts in das erzeugte Stanzloch gebildet. Die mit der Bildung der Vertiefung einhergehenden Materialspannungen erleichtern den Stanzprozess. Zudem vereinfacht die Vertiefung das Einbringen des Nietabschnitts nach Art einer Trichterwirkung.

Vorzugsweise ist ein durch die Stanzkante erzeugter Stanzrand durch die Umformung des Befestigungsabschnitts gebördelt.

Das erfindungsgemäße Verfahren dient zum Herstellen des oben beschriebenen Zusammenbauteils und umfasst die folgenden Schritte:
- Bereitstellen einer Funktionseinheit und Vormontage des Fixierelements an dem Befestigungselement,
- Bereitstellen eines in dem Bereich, in dem die Funktionseinheit angebracht wird, vorzugsweise nicht vorgelochten Werkstücks, insbesondere eines Blechteils,
- Einleiten einer Einpresskraft in die Funktionseinheit und Einpressen der Funktionseinheit in das Werkstück zum Erzeugen eines Stanzlochs mittels der Stanzkante, und
- Umformen von Material des Befestigungsabschnitts (13), um einen Hinterschnitt auszubilden, der an das Stanzloch angrenzendes Material des Werkstücks (70) zumindest abschnittsweise umgreift.

Vorzugsweise wird das Werkstück mittels der Funktionseinheit vor dem Erzeugen des Stanzlochs in Einführrichtung umgeformt, insbesondere wobei eine Vertiefung in dem Werkstück ausgebildet wird. Dies kann dadurch erfolgen, dass das Werkstück auf einer Matrize aufliegt, wobei ein Bereich des Werkstücks, in dem der Schaft angreift, über einer Vertiefung der Matrize positioniert ist. Dadurch, dass der Schaft in der Einführrichtung gegen den Abschnitt des Werkstücks gepresst wird, wird der Abschnitt des Werkstücks in die Vertiefung der Matrize umgeformt, sodass die trichterförmige Vertiefung des Werkstücks in Einführrichtung erzeugt wird. Erst wenn das Material des Werkstücks aufgrund der Umformung mit einer Kante der Matrize in Berührung kommt und der Schaft weiter an dem Werkstück angreift, wird das Stanzloch erzeugt.

Um die trichterförmige Vertiefung zu erzeugen, kann die Kante der Matrize in Einführrichtung der Einheit in Bezug auf eine Anlagefläche der Matrize, auf der das Werkstück aufliegt, zurückversetzt angeordnet sein.

Das Material des Befestigungsabschnitts kann zum Bilden des Hinterschnitts nach außen umgeformt werden, beispielsweise sodass es im Querschnitt hakenförmig nach außen umgeformt beziehungsweise aufgerollt ist.

Vorzugsweise erfolgt das Umformen des Materials des Befestigungsabschnitts mittels einer Matrize, auf welcher das Werkstück aufliegt.

Der Befestigungsabschnitt wird dann gegen die Matrize gepresst und aufgrund der Einpresskraft und der Geometrie der Matrize entsprechend umgeformt.

In vorteilhafter Ausgestaltung wird das Material des Befestigungsabschnitts durch Pressen des freien Endes des Nietabschnitts gegen eine sich quer zur Einführrichtung erstreckende Umformgeometrie der Matrize nach außen umgeformt. Die Umformgeometrie weist dabei vorzugsweise eine im Querschnitt gekrümmte Umformfläche auf.

Die Erfindung wird nachfolgend anhand von vorteilhaften Ausführungsformen rein beispielhaft erläutert. In den Zeichnungen, die die Ausführungsformen schematisch veranschaulichen, zeigt
- Fig. 1a: eine perspektivische Ansicht eines Befestigungselements und eines Fixierelements gemäß einem Ausführungsbeispiel,
- Fig. 1b: eine weitere perspektivische Ansicht des Befestigungselements und des Fixierelements aus Fig. 1a,
- Fig. 2: eine perspektivische Ansicht eines Ausschnitts eines Werkstücks mit einem darin angeordneten Befestigungselement und einem Kabelschuh,
- Fig. 3: die perspektivische Ansicht gemäß Fig. 2, in der der Kabelschuh mittels des Fixierelements an dem Befestigungselement befestigt ist,
- Fig. 4: eine Querschnittsansicht von einer Funktionseinheit und einem Werkstück während des Verfahrens zum Herstellen eines Zusammenbauteils, wobei das Werkstück mittels der Funktionseinheit vor dem Erzeugen des Stanzlochs in Einführrichtung unter Bildung einer trichterförmigen Vertiefung umgeformt wird,
- Fig. 5: eine weitere Querschnittsansicht von der Funktionseinheit und dem Werkstück aus Fig. 4 während des Verfahrens zum Herstellen eines Zusammenbauteils, wobei die Funktionseinheit in das Werkstück zum Erzeugen eines Stanzlochs mittels der Stanzkante eingepresst und ein Stanzbutzen herausgetrennt wird,
- Fig. 6: eine weitere Querschnittsansicht von der Funktionseinheit und dem Werkstück aus Fig. 4 während des Verfahrens zum Herstellen eines Zusammenbauteils, wobei Material des Befestigungsabschnitts umgeformt wird,
- Fig. 7: eine weitere Querschnittsansicht von der Funktionseinheit und dem Werkstück aus Fig. 4 während des Verfahrens zum Herstellen eines Zusammenbauteils in einem im Vergleich zu Fig. 6 nachfolgenden Verfahrensstadium und
- Fig. 8: eine weitere Querschnittsansicht von der Funktionseinheit und dem Werkstück aus Fig. 4 während des Verfahrens zum Herstellen eines Zusammenbauteils, wobei mit Material des Befestigungsabschnitts ein Hinterschnitt gebildet ist, in dem an das Stanzloch angrenzendes Material des Werkstücks aufgenommen ist.

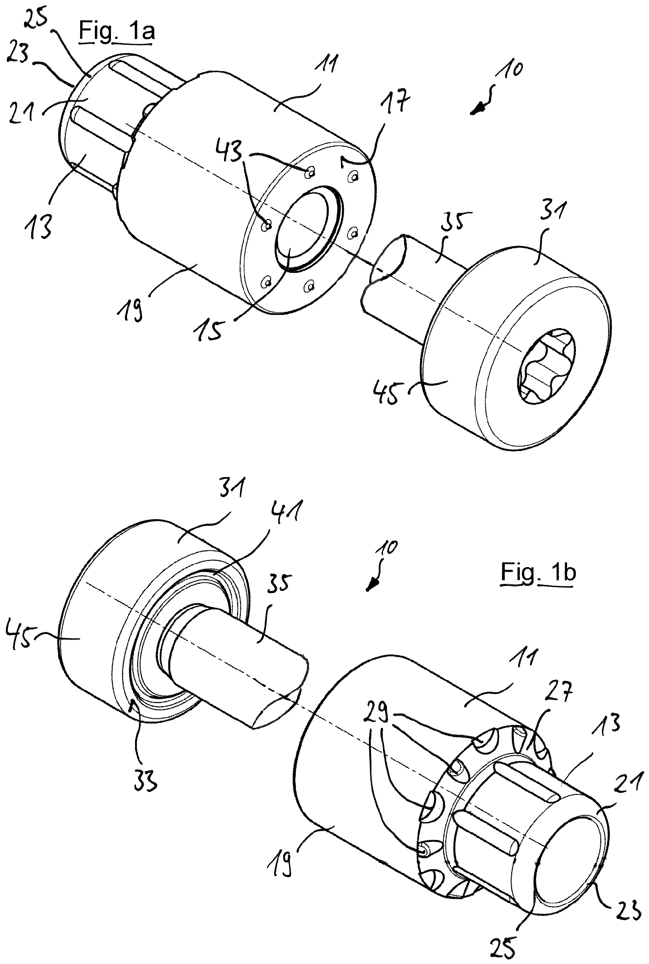

Fig. 1a und 1b zeigen ein als Mutterelement ausgebildetes, ringförmiges Befestigungselement 11 und ein zugehöriges, als Bolzenelement ausgebildetes Fixierelement 31 in unterschiedlichen perspektivischen Ansichten. Das Befestigungselement 11 und das Fixierelement 31 bilden gemeinsam eine selbststanzende Funktionseinheit 10.

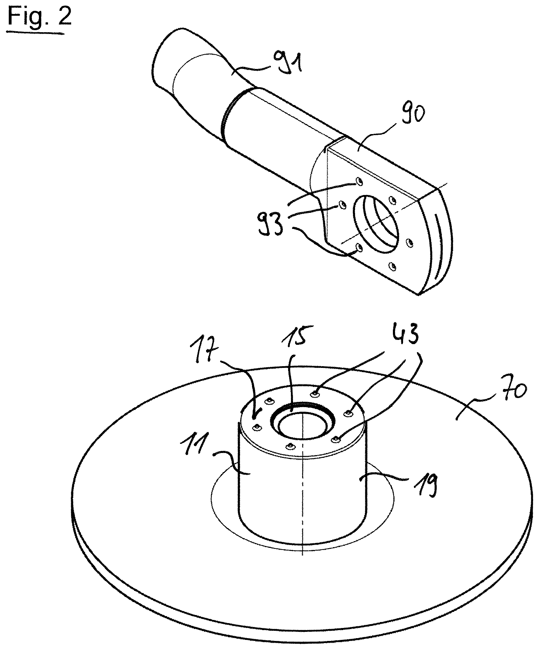

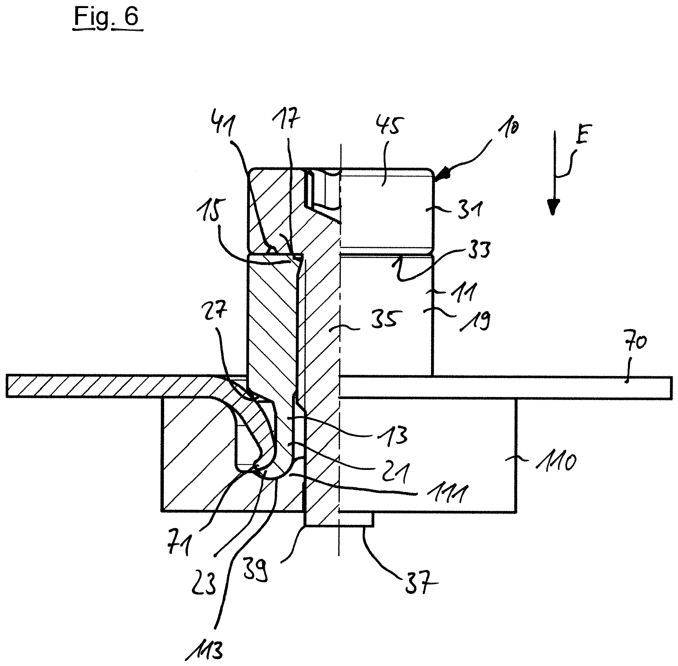

Das Befestigungselement 11 weist einen Befestigungsabschnitt 13 auf, der zum Befestigen der Funktionseinheit 10 an einem Werkstück 70 dient, wie später noch ausführlich beschrieben wird (siehe Fig. 2 bis 8). Außerdem ist das Befestigungselement 11 mit einem Funktionsabschnitt 15, der ein nicht näher dargestelltes Innengewinde und eine Auflagefläche 17 aufweist, und einem Basisabschnitt 19, von dem sich in axialer Richtung ein umformbarer Nietabschnitt 21 erstreckt, versehen. Man kann auch sagen, dass der Basisabschnitt 19 zumindest abschnittsweise den Funktionsabschnitt 15 umfasst. Mehrere Erhebungen 43, im vorliegenden Beispiel sechs Erhebungen 43, sind an der Auflagefläche 17 entlang einer gedachten Kreisbahn in gleichen Abständen zueinander angeordnet.

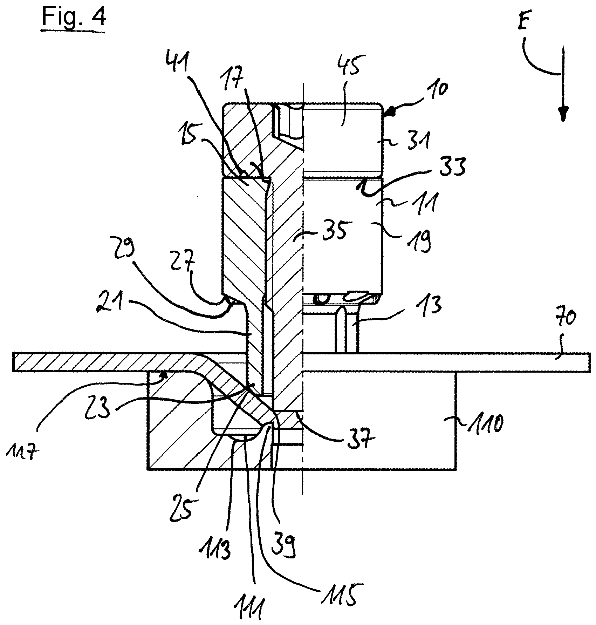

Der Außenumfang eines freien Endes 23 des Nietabschnitts 21 ist mit einer gekrümmten Kante 25 versehen, wie insbesondere auch Fig. 4 anschaulich zeigt.

Der Befestigungsabschnitt 13 weist außerdem eine in den Nietabschnitt 21 übergehende und an dem Basisabschnitt 19 ausgebildete Anpressfläche 27 auf, die mit mehreren in gleichen Abständen zueinander an der Anpressfläche 27 angeordneten Verdrehsicherungsmerkmalen 29 versehen ist. Die Verdrehsicherungsmerkmale 29 sind im vorliegenden Beispiel als in die Anpressfläche 27 eingebrachte Einkerbungen zum Aufnehmen von verdrängtem Material des Werkstücks 70 bzw. Rippen zum Verdrängen von Material des Werkstücks 70 ausgebildet. Die Einkerbungen und Rippen sind alternierend angeordnet. Grundsätzlich können beliebige Merkmale vorgesehen sein, welche geeignet sind, eine Verdrehsicherung gegenüber dem Werkstück 70 im montierten Zustand zu bewerkstelligen.

Das Fixierelement 31 ist mit einem Kopf 45 und einem sich axial von dem Kopf 45 erstreckenden Schaft 35 versehen. Der Kopf 45 ist an seiner dem Schaft 35 zugewandten Seite mit einer Kontaktfläche 33 versehen, die im an dem Befestigungselement 11 vormontierten Zustand des Fixierelements 31 auf der Auflagefläche 17 aufliegt und in die eine Vertiefung 41 in Form einer Ringnut zum Aufnehmen der Erhebungen 43 im vormontierten Zustand eingebracht ist.

Der in Fig. 1a und 1b mittels Bruchlinien verkürzt dargestellte Schaft 35 ist mit einem in Fig. 1a und 1b nicht näher dargestellten Außengewinde versehen, um das Fixierelement 31 mit dem Befestigungselement 11 zu verschrauben, sodass sich der Nietabschnitt 21 im an dem Befestigungselement 11 vormontierten Zustand des Fixierelements 31 koaxial zu dem Schaft 35 erstreckt und sich der Schaft 35 durch den ringförmigen Nietabschnitt 21 hindurch erstreckt, wie insbesondere aus Fig. 4 ersichtlich ist. Dabei ragt ein mit einer Stanzkante 39 versehenes freies Ende 37 des Schafts 35 im an dem Befestigungselement 11 vormontierten Zustand des Fixierelements 31 durch das Befestigungselement 11 hindurch, sodass das freie Ende 37 in axialer Richtung aus dem Befestigungselement 11 heraussteht, z.B. um etwa 1 mm bis 6 mm. Die axiale Erstreckung des Befestigungselements 11 beträgt dabei bevorzugt zwischen etwa 75 % und 95 %, vorzugsweise 85 % bis 90 %, der axialen Erstreckung des Schafts 35.

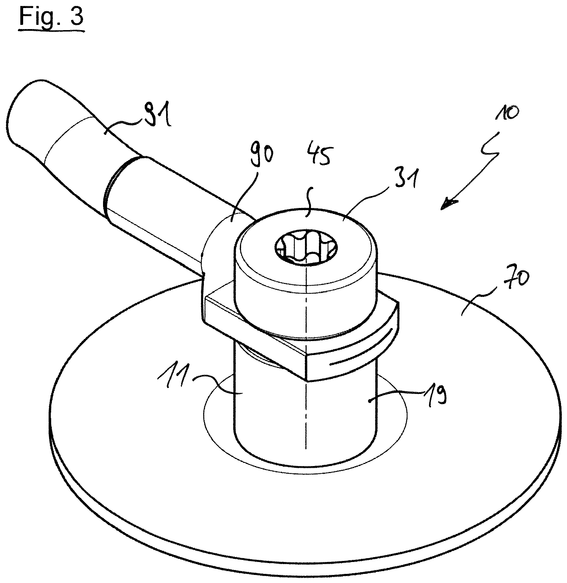

Fig. 2 und 3 zeigen das Befestigungselement 11 im an einem Werkstück 70 befestigten Zustand. Dabei ragt der Basisabschnitt 19 mit der Auflagefläche 17 von dem Werkstück 70, insbesondere einem Blechteil, hervor. Ferner ist ein Kabelschuh 90 mit einem Kabel 91, insbesondere einem Massekabel, gezeigt. An dem Kabelschuh 90 sind mehrere Vertiefungen 93 zu sehen, die von den Erhebungen 43 in den Kabelschuh 90 eingepresst werden, wenn dieser durch das Einschrauben des Fixierelements 31 in das Element 11 an der Einheit 10 fixiert wird. Die Vertiefungen 93 können auch vorgefertigt sein. Die Einheit 10 ist in Fig. 3 in einem montierten Zustand gezeigten, d.h. in einem Zustand, in dem das Befestigungselement 11 an dem Werkstück 70 montiert ist und der Kabelschuh 90 zwischen Befestigungselement 11 und Fixierelement 31 geklemmt ist. Aufgrund der Vertiefungen 93 und der Erhebungen 43 kann ein Verrutschen oder Verdrehen des Kabelschuhs relativ zu dem Befestigungselement 11, und somit ein Verlust oder eine Verminderung des elektrischen Kontakts, vermieden werden.

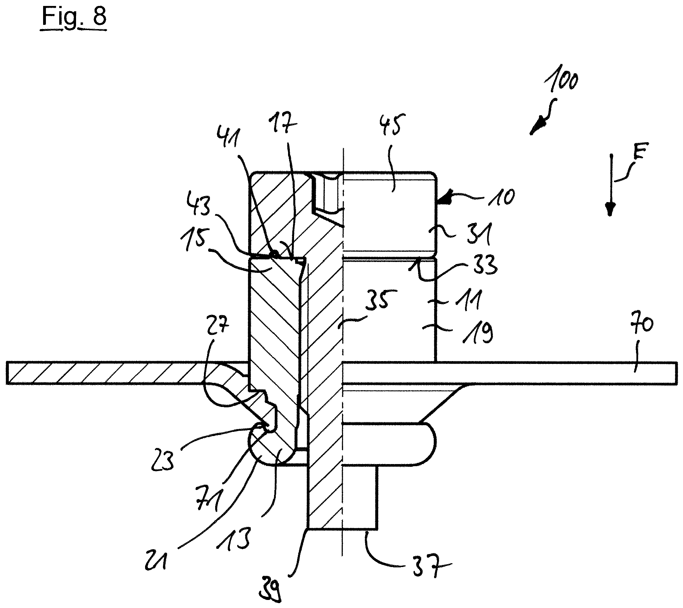

Mit Blick auf Fig. 4 bis 8 wird nachfolgend ein Verfahren zum Herstellen eines Zusammenbauteils 100 (siehe Fig. 8) beschrieben. Dabei wird zunächst eine Funktionseinheit 10 vormontiert, sodass die Kontaktfläche 33 auf der Auflagefläche 17 aufliegt, wie in Fig. 4 gezeigt. Ferner wird das Werkstück 70 bereitgestellt und auf einer Anlagefläche 117 einer Matrize 110 angeordnet, sodass der Bereich des Werkstücks 70, an dem das Befestigungselement 11 angebracht werden soll, über einer Ausnehmung in der Matrize 110 positioniert ist.

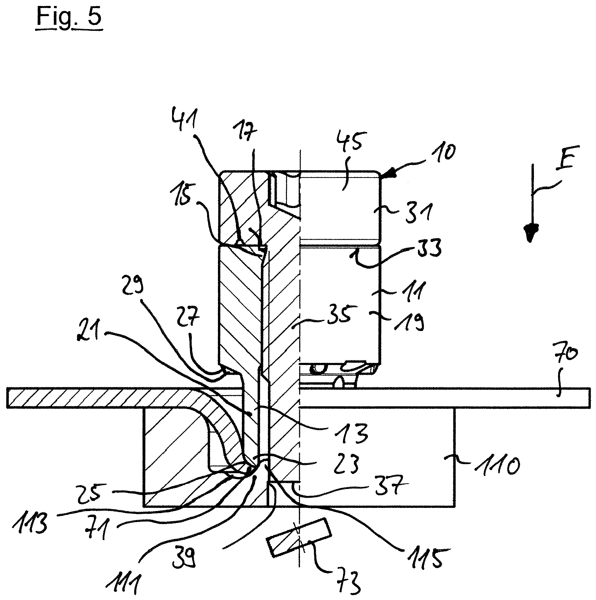

Sodann wird eine Einpresskraft in die Funktionseinheit 10 eingeleitet, sodass die Funktionseinheit 10 in das Werkstück 70 eingepresst wird. Dabei wird das freie Ende 37 des Schafts 35 in einer Einführrichtung E mit der Stanzkante 39 voran gegen den über der Ausnehmung der Matrize 110 liegenden Bereich des Werkstücks 70 gepresst. Dadurch wird zunächst der Abschnitt des Werkstücks 70 in der Einführrichtung E in die Vertiefung der Matrize 110 umgeformt. Erst wenn das Material des Werkstücks 70 aufgrund der Umformung mit einer Kante 115 der Matrize 110 - diese ist in Einführrichtung bezüglich der Fläche 117 zurückversetzt - in Berührung kommt (in Fig. 4 gezeigter Zustand) und der Schaft 35 weiter in der Einführrichtung E an dem Werkstück 70 angreift, wird mittels der Stanzkante 39 in dem Werkstück 70 ein Stanzloch erzeugt und ein Stanzbutzen 73 aus dem Werkstück 70 herausgestanzt, sodass an dem Werkstück 70 ein entsprechender Stanzrand 71 gebildet wird, siehe Fig. 5.

Die Vertiefung des Werkstücks 70, die durch die zurückversetzte Anordnung der Kante 115 erzeugt wird, erleichtert das Einbringen des Nietabschnitts 21, ohne dass dieser zunächst wesentlich verformt wird. Vereinfacht gesagt kann der Nietabschnitt 21 bzw. dessen freies Ende 23 an der geneigten Partie des Werkstücks 70 entlanggleiten und diese im Zuge der Einführbewegung weiter nach radial nach außen drängen, so dass das freie Ende 23 schließlich mit dem Stanzrand 71 in Kontakt kommt (siehe Fig. 4 und 5).

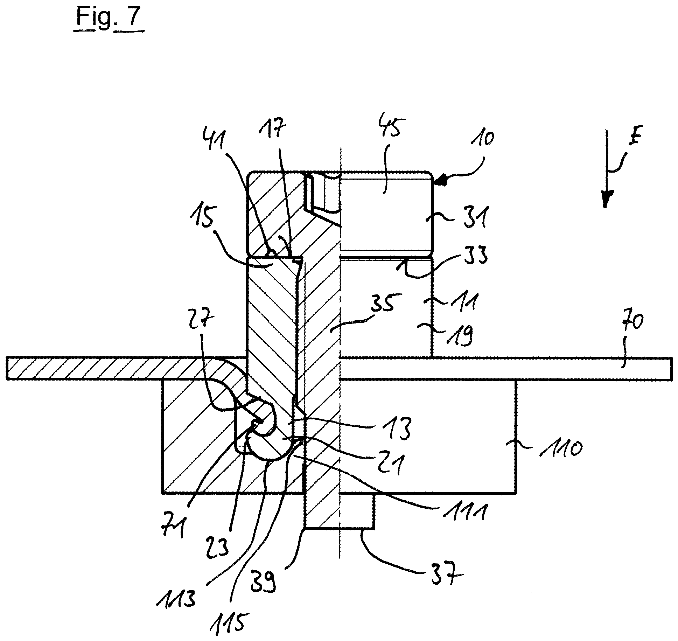

Fig. 5 bis 8 zeigen anschaulich, wie nach dem Stanzen bei Wirken der Einpresskraft in der Einführrichtung E das freie Ende 23 des Nietabschnitts 21 mit der Kante 25 gegen eine gekrümmte Umformfläche 113 einer Umformgeometrie 111 der Matrize 110 gepresst wird. Die gekrümmte Umformfläche 113 erstreckt sich im Wesentlichen in radialer Richtung, also quer zu der Einführrichtung E, sodass Material des Befestigungsabschnitts 13, insbesondere des Nietabschnitts 21, aufgrund des Anpressens gegen die Umformfläche 113 nach außen umgeformt, gleichsam nach außen aufgerollt, wird und an den Stanzrand 71 angrenzendes Material des Werkstücks 70 umformt und umschließt. Dabei hintergreift umgeformtes Material des Nietabschnitts 21 an den Stanzrand 71 angrenzendes Material des Werkstücks 70 in axialer Richtung und bildet, anders ausgedrückt, eine Aufnahmenut aus, in welcher an den Stanzrand 71 angrenzendes Material des Werkstücks 70 aufgenommen ist, sodass ein in axialer Richtung wirkender Hinterschnitt gebildet wird. Wie insbesondere Fig. 7 und 8 zeigen, kann das Material des Befestigungsabschnitts 13 dabei so umgeformt werden, dass es im Querschnitt radial nach außen etwa hakenförmig ausgebildet ist, sodass eine Öffnung des Hakens die Aufnahmenut ausbildet und das Material des Werkstücks 70 aufnimmt. Das an den Stanzrand 71 angrenzende Material des Werkstücks 70 wird dabei - auch durch das Eindringen der Anpressfläche 27 - in den Hinterschnitt verdrängt, wobei der Stanzrand 71 durch die Umformung des Befestigungsabschnitts 13 gebördelt wird.

Wie insbesondere Fig. 8 zeigt, ist Material des Werkstücks 70 aufgrund der Umformung an die Anpressfläche 27 angepresst, sodass das Werkstück 70 zusammen mit den Verdrehsicherungsmerkmalen 29 eine gegen Verdrehen gesicherte Verbindung ausbildet. Zudem ist die Funktionseinheit 10 in axialer Richtung aufgrund des Hinterschnitts an dem Werkstück 70 gesichert.

### Bezugszeichenliste

- 10: Funktionseinheit
- 11: Befestigungselement
- 13: Befestigungsabschnitt
- 15: Funktionsabschnitt
- 17: Auflagefläche
- 19: Basisabschnitt
- 21: Nietabschnitt
- 23: freies Ende des Nietabschnitts
- 25: Kante
- 27: Anpressfläche
- 29: Verdrehsicherungsmerkmal
- 31: Fixierelement
- 33: Kontaktfläche
- 35: Schaft
- 37: freies Ende des Schafts
- 39: Stanzkante
- 41: Vertiefung
- 43: Erhebung
- 45: Kopf
- 70: Werkstück
- 71: Stanzrand
- 73: Stanzbutzen
- 90: Kabelschuh
- 91: Kabel
- 93: Vertiefung
- 100: Zusammenbauteil
- 110: Matrize
- 111: Umformgeometrie
- 113: Umformfläche
- 115: Kante
- 117: Anlagefläche

## Patentansprüche

1. Selbststanzende Funktionseinheit (10) zur Anbringung an einem Werkstück (70), insbesondere an einem Blechteil, umfassend
ein Befestigungselement (11), das einen Befestigungsabschnitt (13) zum Befestigen der Funktionseinheit (10) an dem Werkstück (70) und einen mit einer dem Werkstück (70) abgewandten Auflagefläche (17) versehenen Funktionsabschnitt (15) aufweist, und
ein Fixierelement (31), das - insbesondere mittels einer Drehbewegung - an dem Funktionsabschnitt (15) des Befestigungselements (11) fixierbar ist und das eine dem Werkstück (70) zugewandte Kontaktfläche (33), die in einem an dem Befestigungselement (11) vormontierten Zustand des Fixierelements (31) auf der Auflagefläche (17) aufliegt, und einen Schaft (35) umfasst, der ein mit einer Stanzkante (39) versehenes freies Ende (37) aufweist, welches im an dem Befestigungselement (11) vormontierten Zustand des Fixierelements (31) durch das Befestigungselement (11) hindurchragt, sodass das freie Ende (37) in axialer Richtung aus dem Befestigungselement (11) heraussteht.

2. Funktionseinheit (10) nach Anspruch 1,
**dadurch gekennzeichnet, dass** das Befestigungselement (11) einen Basisabschnitt (19) umfasst, von dem sich in axialer Richtung ein zur Montage der Funktionseinheit (10) an dem Werkstück (70) vorgesehener, umformbarer Nietabschnitt (21) erstreckt, insbesondere wobei sich der Nietabschnitt (21) im an dem Befestigungselement (11) vormontierten Zustand des Fixierelements (31) parallel, insbesondere koaxial, zu dem Schaft (35) erstreckt.

3. Funktionseinheit (10) nach Anspruch 2,
**dadurch gekennzeichnet, dass** das Befestigungselement (11) ringförmig ausgebildet ist und sich der Schaft (35) im an dem Befestigungselement (11) vormontierten Zustand des Fixierelements (31) durch das Befestigungselement (11), insbesondere durch den Nietabschnitt (21), hindurch erstreckt.

4. Funktionseinheit (10) nach Anspruch 2 oder 3,
**dadurch gekennzeichnet, dass** der Nietabschnitt (21) ein freies Ende (23) aufweist, dessen Außenumfang mit einer zumindest abschnittsweise gekrümmten oder zu einer axialen Richtung zumindest abschnittsweise geneigten Kante (25) versehen ist und/oder dass der Befestigungsabschnitt (13) eine Anpressfläche (27) aufweist, die in den Nietabschnitt (21) übergeht, insbesondere wobei die Anpressfläche (27) an dem Basisabschnitt (19) ausgebildet ist.

5. Funktionseinheit (10) nach Anspruch 4,
**dadurch gekennzeichnet, dass** die Anpressfläche (27) und/oder der Nietabschnitt (21) mit wenigstens einem Verdrehsicherungsmerkmal (29), insbesondere mit zumindest einer Einkerbung zum Aufnehmen von verdrängtem Material des Werkstücks (70) und/oder mit zumindest einer Rippe zum Verdrängen von Material des Werkstücks (70), versehen ist.

6. Funktionseinheit (10) nach einem der Ansprüche 1 bis 5,
**dadurch gekennzeichnet, dass** eine axiale Erstreckung des Befestigungselements (11) etwa 75 % bis 95 %, vorzugsweise 85 % bis 90 % einer axialen Erstreckung des Schafts (35) beträgt.

7. Funktionseinheit (10) nach einem der Ansprüche 1 bis 6,
**dadurch gekennzeichnet, dass** die Kontaktfläche (33) mit einer Vertiefung (41), insbesondere einer Ringnut zum - im vormontierten Zustand - Aufnehmen von zumindest einer an der Auflagefläche (17) angeordneten Erhebung (43) versehen ist.

8. Funktionseinheit (10) nach einem der Ansprüche 1 bis 7,
**dadurch gekennzeichnet, dass** das Befestigungselement (11) und das Fixierelement (31) miteinander verschraubbar sind, wobei vorzugsweise das Befestigungselement (11) ein Innengewinde und das Fixierelement (31) ein Außengewinde aufweist und/oder dass das Befestigungselement (11) als Mutterelement ausgebildet ist und das Fixierelement (31) als Bolzenelement ausgebildet ist und/oder dass das Befestigungselement (11) als Mutterelement ausgebildet ist und das Fixierelement (31) als Bolzenelement ausgebildet ist.

9. Zusammenbauteil (100), umfassend
eine Funktionseinheit (10) nach zumindest einem der vorstehenden Ansprüche und
ein Werkstück (70), insbesondere ein Blechteil,
wobei das Befestigungselement (11) in ein durch die Stanzkante (39) des Schafts (35) in das Werkstück (70) eingebrachtes Stanzloch eingepresst ist und umgeformtes Material des Befestigungsabschnitts (13) an das Stanzloch angrenzendes Material des Werkstücks (70) zumindest abschnittsweise hintergreift, insbesondere wobei das umgeformte Material einen in Umfangsrichtung geschlossenen Hinterschnitt bildet.

10. Zusammenbauteil (100) nach Anspruch 9,
**dadurch gekennzeichnet, dass** das Material des Befestigungsabschnitts (13) zum Bilden des Hinterschnitts nach radial außen umgeformt ist.

11. Zusammenbauteil (100) nach Anspruch 9 oder 10,
**dadurch gekennzeichnet, dass** das Werkstück (70) in einem Bereich um das Stanzloch in einer Einführrichtung (E) der Funktionseinheit (10) umgebogen ist und/oder dass ein durch die Stanzkante (39) erzeugter Stanzrand (71) durch die Umformung des Befestigungsabschnitts (13) gebördelt ist.

12. Verfahren zum Herstellen eines Zusammenbauteils (100) nach einem der Ansprüche 9 bis 11, umfassend die Schritte:
- Bereitstellen einer Funktionseinheit (10) nach einem der Ansprüche 1 bis 8 und Vormontage des Fixierelements (31) an dem Befestigungselement (11),
- Bereitstellen eines Werkstücks (70), insbesondere eines Blechteils,
- Einleiten einer Einpresskraft in die Funktionseinheit (10) und Einpressen der Funktionseinheit (10) in das Werkstück (70) zum Erzeugen eines Stanzlochs mittels der Stanzkante (39), und
- Umformen von Material des Befestigungsabschnitts (13), um einen Hinterschnitt auszubilden, der an das Stanzloch angrenzendes Material des Werkstücks (70) zumindest abschnittsweise umgreift.

13. Verfahren nach Anspruch 12,
**dadurch gekennzeichnet, dass** das Werkstück (70) mittels der Funktionseinheit (10) vordem Erzeugen des Stanzlochs in Einführrichtung (E) umgeformt wird, insbesondere wobei eine Vertiefung in dem Werkstück ausgebildet wird, und/oder dass das Material des Befestigungsabschnitts (13) zum Bilden des Hinterschnitts nach außen umgeformt wird.

14. Verfahren nach Anspruch 12 oder 13,
**dadurch gekennzeichnet, dass** das Umformen des Materials des Befestigungsabschnitts (13) mittels einer Matrize (110) erfolgt, die eine Anlagefläche (117) aufweist, auf welcher das Werkstück (70) aufliegt, insbesondere wobei eine zur Bildung des Stanzlochs mit der Stanzkante (39) zusammenwirkende Kante (115) der Matrize in Einführrichtung der Funktionseinheit (10) in Bezug auf die Anlagefläche (117) zurückversetzt angeordnet ist.

15. Verfahren nach Anspruch 14,
**dadurch gekennzeichnet, dass** das Material des Befestigungsabschnitts (13) durch Pressen des freien Endes (23) des Nietabschnitts (21) gegen eine sich quer zur Einführrichtung (E) erstreckende Umformgeometrie (111) der Matrize (110) nach außen umgeformt wird, wobei die Umformgeometrie (111) vorzugsweise eine im Querschnitt gekrümmte Umformfläche (113) aufweist.
